Europäisches Patentamt

European Patent Office

Office européen des brevets

(11) Veröffentlichungsnummer: **0 473 869 A1**

## (12) EUROPÄISCHE PATENTANMELDUNG

(21) Anmeldenummer: **91104618.3**

(51) Int. Cl.5: **H04L 1/16**

(22) Anmeldetag: **23.03.91**

(30) Priorität: **28.08.90 CH 2792/90**

(43) Veröffentlichungstag der Anmeldung:
**11.03.92 Patentblatt 92/11**

(84) Benannte Vertragsstaaten:
**CH DE ES FR GB IT LI**

(71) Anmelder: **Landis & Gyr Betriebs AG**

**CH-6301 Zug(CH)**

(72) Erfinder: **Schaub, Thomas**
**Moosstrasse 16**
**CH-6330 Cham(CH)**

(54) **Verfahren zur automatischen Sendewiederholung eines Telegramms bei dessen fehlerhaftem Empfang.**

(57) In dem Verfahren wird ein fehlerhafter Empfang des Telegramms mittels eines mitübertragenen fehlererkennenden Codes erkannt. Das Telegramm und alle Sendewiederholungen desselben sind mit einem gleichen Wiederholungs-Erkennungszeichen versehen, bei dessem Empfang erkannt wird, ob das zugehörige Telegramm eine Sendewiederholung eines bereits früher gesendeten gleichen Telegramms ist. Nur beim Empfang gleicher Wiederholungs-Erkennungszeichen wird zur Verwirklichung einer Fehlerkorrektur das fehlerhaft empfangene Telegramm mit bereits früher fehlerhaft empfangenen Varianten des gleichen Telegramms verknüpft. Das Verfahren wird vorteilhaft in komplexen Übertragungsnetzen (6) verwendet, die mit einer Vielzahl von Zentralen (7) und Unterstationen (1 bis 5) versehen sind.

Fig. 1

EP 0 473 869 A1

Die Erfindung bezieht sich auf ein verfahren zur automatischen Sendewiederholung eines Telegramms bei dessem fehlerhaften Empfang gemäss dem Oberbegriff des Anspruchs 1.

Das erfindungsgemässe Verfahren wird vorzugsweise verwendet innerhalb oder in der näheren Umgebung von Gebäuden für langsame und preisgünstige drahtlose Telegramm-Übertragungen mit niedrigen Leistungsanforderungen, die z. B. in einer Heizungs- und/oder Klimaanlage einer Fernmessung und/oder einer Fernsteuerung dienen. Die Verwendung drahtloser Übertragungen gewährt dabei eine maximale Flexibilität bei der räumlichen Installation von Sendern und Empfängern des Sende/Empfangs-Systems, da fest installierte Drahtverbindungen vermieden werden. Die Qualität von drahtlosen Übertragungskanälen kann im Laufe der Zeit und/oder von Ort zu Ort sehr stark unterschiedlich sein, so dass die übertragenen Telegramme fehlerhaft empfangen worden sein können. Das erfindungsgemässe Verfahren wird vorzugsweise verwendet beim Vorhandensein sehr stark gestörter Übertragungskanäle.

Weitere Anwendungsgebiete sind Datenübertragungen über ein Energieverteilungsnetz z. B. zum Fernablesen von Zählerständen und/oder zur Laststeuerung.

Zur Übertragung von binären Telegrammen ist die Verwendung von konventionellen ARQ-Verfahren (Automatic Repeat Request) bekannt, bei denen ein Empfänger beim Empfang fehlerhafter Telegramme, diese sofort wieder vergisst und von einem zugehörigen Sender sofort eine Sendewiederholung des übertragenenen Telegramms verlangt, und zwar so oft, bis dass der Empfänger feststellt, dass das übertragene Telegramm fehlerlos empfangen wurde. Um dabei die Fehlerhaftigkeit eines jeden wiederholten oder nichtwiederholten empfangenen Telegramms festzustellen, wertet der Empfänger jeweils einen Fehlererkennungscode aus, der vom Sender zusammen mit dem Telegramm, meistens anschliessend an dem letzteren, zum Empfänger übertragen wird. Die Verwendung, der Aufbau und die Auswertung von Fehlererkennungscodes ist in dem Buch "Data Networks" von D. Bertsekas und R. Gallager, Prentice Hall International Inc., 1987, Seiten 50 bis 59, beschrieben. Nachfolgend gilt immer die Annahme, dass eines der dort beschriebenen Fehlererkennungsverfahren auch jeweils bei der Fehlererkennung im erfindungsgemässen Verfahren verwendet wird und dass diese Fehlererkennungsverfahren somit an sich bekannt sind. Sie brauchen daher nicht näher beschrieben zu werden. In der Praxis werden ARQ-Verfahren in der Regel bevorzugt vor sogenannten Fehlerkorrektur-Verfahren verwendet, wenn in den Übertragungskanälen stark schwankende Signal/Rausch-Verhältnisse vorhanden sind, da sich das ARQ-System einfach an die schwankenden Bedingungen anpasst.

Aus der Druckschrift EUROCON 88, June 13-17, 1988, Stockholm, "A ROBUST PACKET TRANSMISSION SCHEME FOR INDOOR RADIO COMMUNICATION", T. Schaub und J. Adame, ist ein nichtkonventionelles ARQ-Verfahren mit vorhandenem Gedächtnis bekannt. Es arbeitet ähnlich wie das konventionelle ARQ-Verfahren, mit dem Unterschied, dass das empfangene fehlerhafte Telegramm nicht sofort wieder vergessen, sondern gespeichert wird und später beim Empfang eines weiteren fehlerhaften wiederholten Telegramms zur Fehlerkorrektur verwendet wird mit anschliessender erneuter Anwendung des Fehlererkennungsverfahren diesmal für das korrigierte Telegramm und einer Aufforderung zur Sendewiederholung, falls das korrigierte Telegramm ebenfalls fehlerhaft ist. Die Fehlerkorrektur erfolgt dabei jeweils so, dass für jedes Bit aller wiederholten und abgespeicherten Telegramme sowie des gerade empfangenen Telegramms ein Mehrheitsentscheid gefällt wird und das Bit dann den Logikwert erhält, der am häufigsten vorkommt. Während, um die Anzahl Sendewiederholungen erträglich zu halten, die Anwendung des konventionellen ARQ-Verfahrens auf den Einsatz in Übertragungskanälen beschränkt ist, die bei Telegrammlängen von 64 Bits eine relativ niedrige Bit-Fehlerwahrscheinlichkeit von höchstens 3,5% aufweisen, kann das nichtkonventionelle ARQ-Verfahren auch noch in Übertragungskanälen verwendet werden, die eine Bitfehlerwahrscheinlichkeit von 17% aufweisen. Das nichtkonventionelle ARQ-Verfahren ist in der Regel wesentlich besser als das konventionelle ARQ-Verfahren, wenn die Bit-Fehlerwahrscheinlichkeit grösser als 1% ist. Im nichtkonventionellen ARQ-Verfahren besitzt der Empfänger somit ein Gedächtnis bezüglich der bereits fehlerhaft empfangenen Telegramme, deren Informationsinhalt er nicht ignoriert, sondern bei der Auswertung nachfolgend empfangener wiederholter Telegramme nutzt, um schneller, d. h. mit weniger Sendewiederholungen, zum korrekten Telegramminhalt zu gelangen. Das nichtkonventionelle ARQ-Verfahren gestattet dem Empfänger also eine effizientere Fehlerbehebungs-Strategie als das konventionelle ARQ-Verfahren, so dass bedeutend weniger Sendewiederholungen bis zum Empfang eines fehlerfreien Telegramms erforderlich sind.

Das nichtkonventionelle ARQ-Verfahren eignet sich sehr gut für Punkt zu Punkt Telegramm-Übertragungen. In einem Netz mit mehreren Sendern und/oder mehreren Empfängern lässt sich das nichtkonventionelle ARQ-Verfahren jedoch nicht mehr in seiner ursprünglichen Form verwenden, da nicht mehr gewährleistet ist, dass Widerholungstelegramme zeitlich aufeinander folgend die Empfänger erreichen, sondern dass sie zeitlich durch Telegramme anderer Sender und/oder anderer Empfänger voneinander getrennt sind. Das empfangene fehlerhafte Telegramm kann dann nicht mehr eindeutig einem bestimmten Sender oder Empfänger zugeordnet werden und es besteht die Gefahr, dass unterschiedliche Telegramme gleicher und/oder unterschiedlicher Herkunft miteinander verknüpft werden.

Der Erfindung liegt die Aufgabe zugrunde, das nichtkonventionelle ARQ-Verfahren so zu verbessern, dass es in komplexen Kommunikationsnetzen verwendet werden kann, die eine Vielzahl von Sendern und Empfängern enthalten. Die Verwendung des erfindungsgemässen Verfahrens ist vor allem dann vorteilhaft, wenn das Aussenden der Telegramme von einer zentralen Stelle aus koordiniert werden kann.

Die genannte Aufgabe wird erfindungsgemäss durch die im Kennzeichen des Anspruchs 1 angegebenen Merkmale gelöst.

Vorteilhafte Ausgestaltungen der Erfindung ergeben sich aus den abhängigen Ansprüchen.

Ein Ausführungsbeispiel der Erfindung ist in der Zeichnung dargestellt und wird im folgenden näher beschrieben.

Es zeigen:

Fig. 1    ein Blockschaltbild eines Übertragungssystems, das aus einer Zentrale und mehreren Unterstationen besteht,

Fig. 2    ein Blockschaltbild einer Computeranordnung,

Fig. 3    eine schematische Darstellung eines Telegramms mit vorausgesandtem Wiederholungs-Erkennungszeichen,

Fig. 4    ein Flussdiagramm eines Sender-Programms,

Fig. 5    ein Flussdiagramm eines Empfänger-Programms,

Fig. 6    ein Flussdiagramm eines Empfänger-Codierungsprogramms und

Fig. 7    ein Flussdiagramm eines Empfänger-Modifizierungs- und Decodierungsprogramms.

Gleiche Bezugszahlen bezeichnen in allen Figuren der Zeichnung gleiche Teile.

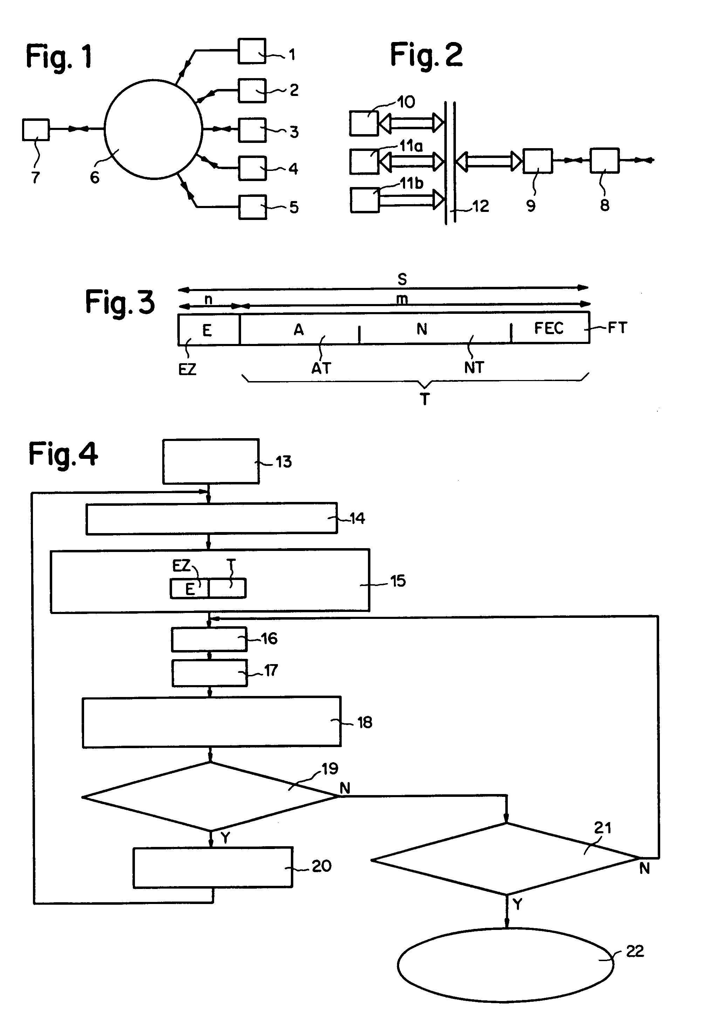

Das in der Fig. 1 dargestellte Übertragungssystem besteht aus mehreren, z. B. fünf Unterstationen 1, 2, 3, 4 und 5, die über ein Übertragungsnetz 6 mit mindestens einer Zentrale 7 verbunden sind. Das Übertragungsnetz 6 kann in beiden Übertragungsrichtungen benutzt werden und besteht vorzugsweise aus Funkkanälen oder Datenkanälen auf dem Energieverteilungsnetz, die zeitweise sehr stark gestört sein können. Die Zentrale 7 sowie die Unterstationen 1 bis 5 enthalten je einen Sende- und einen Empfangsteil. Die Zentrale 7 organisiert den Austausch von Telegrammen T so, dass nie mehrere Sendeteile gleichzeitig senden. Die Telegramme T können in der Zentrale 7 sowie in den Unterstationen 1 bis 5 erzeugt werden. Die ausgesendeten Telegramme T werden über das Übertragungsnetz 6 zu Empfangsteilen übertragen, um anschliessend in mindestens einem Empfangsteil ausgewertet zu werden. Die Station, die das Telegramm T ausgewertet hat, kann ihrerseits ein Bestätigungssignal erzeugen, welches über das Übertragungsnetz 6 zur Station übertragen wird, die das Telegramm T ausgesendet hat. Zur Vereinfachung der Beschreibung gilt nachfolgend die Annahme, dass die ein Telegramm sendende Station die Zentrale 7 sei und dass die das Telegramm auswertende Station die Unterstation 1 ist. Die Übertragung über das Übertragungsnetz 6 kann mittels eines konventionellen Modulationsverfahrens erfolgen, z. B. eines als FSK-Verfahren ("Frequency Shift Keying"-Verfahren) bekannten Frequenz-Umtastverfahrens.

Jede Zentrale 7 und jede Unterstation 1 bis 5 enthält zur Generierung und Auswertung von Übertragungssignalen vorzugsweise eine Computeranordnung, die ähnlich aufgebaut ist wie die in der Fig. 2 dargestellte Computeranordnung. Letztere enthält ein Modem 8 (Modulator/Demodulator) und einen Computer 9;10;11a;11b. Der Computer 9;10;11a;11b enthält seinerseits einen Serie/Parallel-Wandler 9, einen Zentralprozessor 10 (CPU: Central Processor Unit), einen Schreib/Lese-Speicher 11a, z.B. ein RAM (Random Access Memory), und einen Festwertspeicher 11b, z.B. ein ROM (Read Only Memory), die alle über eine Busverbindung 12 miteinander verbunden sind. Der Datenaustausch über die Busverbindung 12 wird mit Ausnahme der Busverbindung des Festwertspeichers 11b in beiden Übertragungsrichtungen betrieben, während der Datenaustausch über die Busverbindung des Festwertspeichers 11b nur in einer vom Festwertspeicher 11b wegweisenden Übertragungsrichtung betrieben wird. Ein erster serieller Eingang/Ausgang des Modems 8 ist mit einem seriellen Eingang/Ausgang des Serie/Parallel-Wandlers 9 verbunden, dessen Parallel-Eingang/Ausgang an der Busverbindung 12 angeschlossen ist. Ein zweiter serieller Eingang/Ausgang des Modems 8 bildet einen Eingang/Ausgang der Computeranordnung und ist, nicht dargestellt, mit dem Übertragungsnetz 6 verbunden.

Ein jedes gesendete Telegramm T besteht jeweils, wie in der Fig. 3 dargestellt, aus einem Adressenteil AT, einem Nachrichtenteil NT und einem Fehlererkennungsteil FT, die bei Verwendung eines systematischen fehlererkennenden Codes alle als Informations-Blöcke in der angegebenen Reihenfolge zeitlich nacheinander angeordnet sind. Bei Verwendung eines unsystematischen fehlererkennenden Codes kann das Telegramm T nicht mehr in die drei angegebenen getrennten Teile aufgespaltet werden. Die Erfindung gilt jedoch sinngemäss auch bei der Verwendung unsystematischer fehlererkennender Code. Jedes gesendete Telegramm T ist mit einem Wiederholungs-Erkennungszeichen EZ versehen, welches z. B., wie in der Fig. 3 dargestellt, vom Sendeteil in der Zentrale 7 dem gesendeten Telegramm T als Bit-Block vorausgesandt wird. Das Wiederholungs-ErkennungszeichenEZ und das zugehörige gesendete Telegramm T stellen eine gesendete Sequenz S dar. Der Adressenteil AT, der Nachrichtenteil NT und der Fehlererkennungsteil FT sowie das Wiederholungs-Erkennungszeichen EZ bestehen je aus einer Reihenfolge von Bits und bilden somit je einen Bit-Block. Der Wert bzw. der Inhalt des Wiederholungs-Erkennungszeichen EZ, des Adressenteils AT, des Nachrichtenteils NT und des Fehlererkennungsteils FT werden nachfolgend mit E, A, N bzw. FEC bezeichnet, wobei FEC einen fehlererkennenden Code darstellt. Das gesendete Telegramm T besitzt total m Bits, das Wiederholungs-Erkennungszeichen EZ total n Bits und die gesendete Sequenz S total $m+n$ Bits. Es gilt z. B. $m=64$. Der Adressenteil AT des gesendeten Telegramms T enthält, z.B. binär codiert, die Adresse A desjenigen Empfangsteils 1, für den das gesendete Telegramm T bestimmt ist, während der Nachrichtenteil NT des gesendeten Telegramms T, z. B. ebenfalls binär codiert, die eigentliche Nachricht N enthält, die vom Sendeteil in der Zentrale 7 zum betreffenden Empfangsteil in der Unterstation 1 zu übertragen ist.

Wenn das gesendete Telegramm T im Übertragungsnetz 6 gestört wird, kann es sehr stark verfälscht werden und die Logikwerte seiner einzelnen Bits können dann in ihrem Wert umgekehrt werden, so dass vom Empfangsteil 1 ein Logikwert "1" statt eines Logikwertes "0" oder umgekehrt ein Logikwert "0" statt eines Logikwertes "1" empfangen wird. Das empfangene, möglicherweise verfälschte Telegramm wird nachfolgend mit $T_R$ bezeichnet (Der Index R bedeutet "Received"). Wenn die einzelnen Bits des gesendeten Telegramms T unabhängig voneinander gestört werden und wenn die Wahrscheinlichkeit $P_{Bit}$, dass ein Bit falsch empfangen wird, 10% beträgt, dann ist bei einer Telegrammlänge von $m=64$ Bits die Wahrscheinlichkeit, dass das gesendete Telegramm T fehlerhaft empfangen wird, gleich $P_{tele}=1-(1-P_{Bit})^m = 1-(1-0,1)^{64}=0,99882$, also sehr gross.

Im erfindungsgemässen Verfahren wird jeweils das nichtkonventionelle ARQ-Verfahren verwendet. Ein fehlerhafter Empfang des gesendeten Telegramms T wird dann jeweils mittels des mitübertragenen fehlererkennenden Codes FEC, der im Fehlererkennungsteils FT des gesendeten Telegramms T enthalten ist, auf, wie bereits erwähnt, an sich bekannte und daher nicht näher beschriebene Weise detektiert und erkannt. Falls eine Fehlerhaftigkeit des empfangenen Telegramms $T_R$ vom Empfangsteil in der Unterstation 1 erkannt wird, veranlasst dieser beim Sendeteil in der Zentrale 7 anschliessend eine Sendewiederholung des zum fehlerhaft empfangenen Telegramm $T_R$ gehörigen gesendeten Telegramms T. Falls das gesendete wiederholte Telegramm T ebenfalls fehlerhaft empfangen wird, verlangt der Empfangsteil in der Unterstation 1 erneut vom sendeteil in der Zentrale 7 eine oder ggf. sogar mehrere weitere Sendewiederholungen und zwar in der Regel soviele, bis dass der Empfangsteil in der Unterstation 1 den Empfang eines fehlerfreien Telegramms $T_R$ feststellt und bestätigt. Der Empfangsteil in der Unterstation 1 veranlasst dabei vorzugsweise eine Sendewiederholung, indem er dem ihm zugehörigen Sendeteil in der Zentrale 7 keine Empfangsbestätigung des gesendeten Telegramms T sendet, so dass der Sendeteil in der Zentrale 7, wenn er nicht rechtzeitig innerhalb einer bestimmten vorgegebenen Zeit die Empfangsbestätigung erhält, eine Sendewiederholung des zuletzt von ihm gesendeten Telegramms T veranlasst.

Eine Fehlerkorrektur eines jeden fehlerhaft empfangenen Telegramms $T_R$ erfolgt dann durch eine Verknüpfung des letzteren mit mindestens einer bereits früher fehlerhaft empfangenen Variante des gleichen gesendeten Telegramms T. Zur Durchführung der Fehlerkorrektur wird dabei vorzugsweise das fehlerhaft empfangene Telegramm $T_R$ mit allen bereits früher fehlerhaft empfangenen Varianten des gleichen gesendeten Telegramms T bitweise so verknüpft, dass in einem so erhaltenen und im Empfangsteil abgespeicherten verknüpften Telegramm M jedem Bit des empfangenen Telegramms T ein Wert entspricht, der das Resultat je einer Mehrheitsentscheidung ist, durch die abgeklärt wird, welches der wahrscheinlichste Logikwert des betreffenden Bits ist. Darauf wird gegebenenfalls der Logikwert des betreffenden Bits entsprechend korrigiert, indem ein falscher Logikwert in seinem Wert umgekehrt wird, d. h. vom Logikwert "1" in den Logikwert "0" oder vom Logikwert "0" in den Logikwert "1" umgewandelt wird. Anschliessend, d. h. nach der verwirklichten Fehlerkorrektur des fehlerhaft empfangenen Telegramms $T_R$ wird ein so erhaltenes fehlerkorrigiertes Telegramm $T_S$ mittels eines dann ebenfalls fehlerkorrigierten fehlererkennenden Codes $FEC_s$ des fehlerkorrigierten Telegramms $T_s$ auf vorhandene Fehlerfreiheit geprüft. Bei nichtvorhandener Fehlerfreiheit des fehlerkorrigierten Telegramms $T_s$ wird dann vom Empfangsteil in der Unterstation 1 beim Sendeteil in der Zentrale 7 eine Sendewiederholung des zum fehlerhaft empfangenen Telegramm $T_R$ gehörigen gesendeten Telegramms T veranlasst.

Das Wiederholungs-Erkennungszeichen EZ kann bei der Übertragung natürlich ebenfalls verfälscht werden. Es kann jedoch weniger fehleranfällig gemacht werden, indem vorzugsweise möglichst kurze Wiederholungs-Erkennungszeichen EZ, d. h. Wiederholungs-Erkennungszeichen EZ mit einem niedrigen Wert von n, verwendet werden.

Wenn der Wert von n bedeutend kleiner gewählt wird als der Wert von m, dann ist die Fehlerwahrscheinlichkeit des Wiederholungs-Erkennungszeichens EZ bedeutend kleiner als diejenige des Telegramms T. Es gilt z. B. $n = 2$ oder $n = 6$. Ein 2-Bit Wiederholungs-Erkennungszeichen EZ, welches die Werte 00, 01, 10 oder 11 aufweist, kann z. B. mittels eines zyklischen Telegrammzählers, der die nicht wiederholten Telegramme T zählt, erzeugt werden. Unter den gleichen Bedingungen wie beim Telegramm T ist mit $n = 2$ die Wahrscheinlichkeit eines falsch empfangenen Wiederholungs-Erkennungszeichens EZ gleich $P_{EZ} = 1-(1-P_{Bit})^n = 1-(1-0{,}1)^2 = 0{,}19$ und damit viel kleiner als $P_{Tele} = 0{,}99882$.

Ein weitere Reduzierung der Fehlerwahrscheinlichkeit des Wiederholungs-Erkennungszeichen EZ wird dadurch erreicht, dass es mit einem fehlerkorrigierenden Code versehen wird, indem vorzugsweise sein uncodierter Inhalt mehrmals, z. B. dreimal, wiederholt wird, so dass es schliesslich bei der Verwendung eines uncodierten 2-Bit Wiederholungs-Erkennungszeichens EZ aus $2 \times 3 = 6$ Bits besteht. In diesem Fall besteht die Möglichkeit einen Fehler pro 3 Bits mittels einer Mehrheitsentscheidung zu korrigieren. Die Fehlerwahrscheinlickeit des 6-Bit Wiederholungs-Erkennungszeichens EZ ist dann gleich $P_{EZ.korr} = 1-[(0{,}9)^3 + 3.0.1.0{,}9^2]^2 = 0{,}0552$, also kleiner als $P_{EZ} = 0{,}19$.

In jedem Fall ist die Anzahl n Bits des Wiederholungs-Erkennungszeichens EZ möglichst klein und höchstens nur so gross zu wählen, dass es unwahrscheinlich ist, dass ein Empfangsteil ungleich gesendete Telegramme T miteinander verknüpft.

Jedes gesendete Telegramm T ist somit in Gestalt des Wiederholungs-Erkennungszeichens EZ mit eine Art Etikette versehen, das wesentlich weniger anfällig für Übertragungsfehler ist als das gesendete eigentliche Telegramm T.

Jedes gesendete Telegramm T und alle Sendewiederholungen desselben werden vom Sendeteil in der Zentrale 7 mit einem gleichen Wiederholungs-Erkennungszeichen EZ versehen, bei dessen Empfang der Empfangsteil in der Unterstation 1 am empfangenen Informationsinhalt E desselben erkennt, ob das zugehörige gesendete Telegramm T eine Sendewiederholung eines bereits früher gesendeten gleichen Telegramms T ist. Am empfangenen Wert von E erkennt somit der Empfangsteil in der Unterstation 1, ob schon eine oder mehrere fehlerhafte Varianten des betreffenden Telegramms T von ihm empfangen und in irgend einer Form abgespeichert wurden, oder ob es sich um ein neues, erstmalig empfangenes Telegramm T handelt. Nur bei einer Sendewiederholung, d. h. beim Empfang gleicher Wiederholungs-Erkennungszeichen EZ, verknüpft der Empfangsteil in der Unterstation 1 das fehlerhaft empfangene Telegramm $T_R$ mit bereits früher fehlerhaft empfangenen Varianten des gleichen gesendeten Telegrammes T. Jedes empfangene Telegramm $T_R$ wird dabei zu Beginn zuerst einmal geprüft, ob es fehlerfrei ist, bevor es, falls es sich um eine Telegramm-Wiederholung handelt, mit den fehlerhaften, bereits früher empfangenen Varianten des gesendeten Telegramms T verknüpft wird. Damit ist gewährleistet, dass das erfindungsgemässe Verfahren auch im Falle eines falsch erkannten Wiederholungs-Erkennungszeichens EZ nie schlechtere Resultate ergibt als ein konventionelles ARQ-Verfahren.

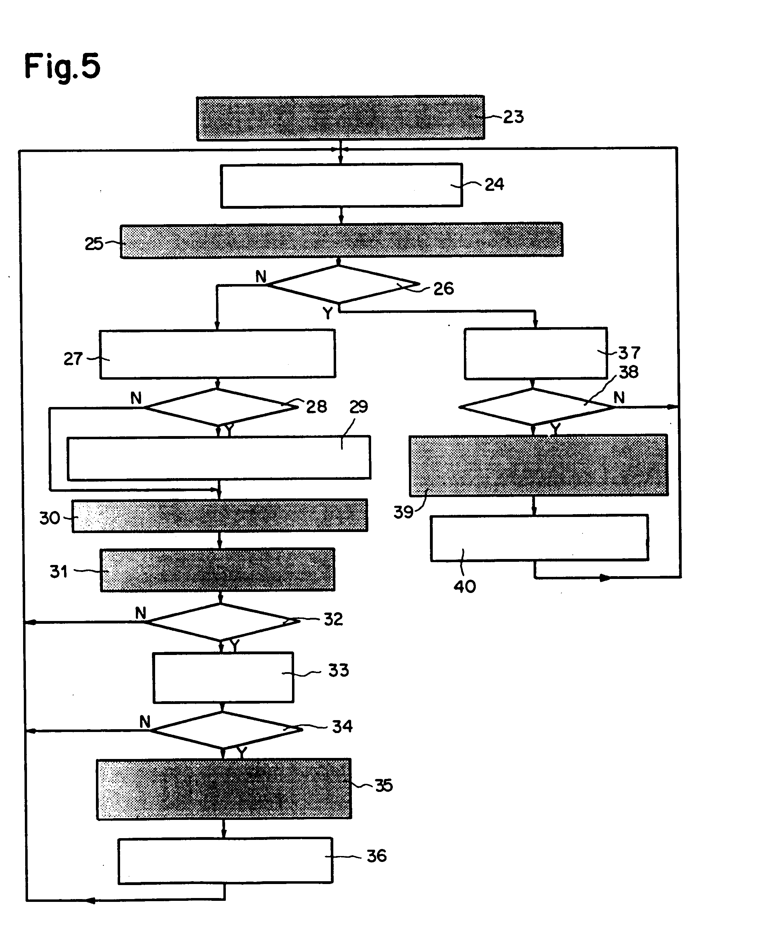

In den Figuren 4 bis 7 bezeichnet jeweils ein Y (Yes) einen Ja-Ausgang und ein N (No) einen Nein-Ausgang eines zugehörigen Entscheidungsblocks.

Das in der Fig. 4 dargestellte Flussdiagramm eines Sender-Programms enthält Funktionsblöcke 13, 14, 15, 16, 17 und 18 sowie einen Entscheidungsblock 19 und einen Funktionsblock 20, die alle in der angegebenen Reihenfolge in Kaskade geschaltet sind. Ausserdem ist noch ein Entscheidungsblock 21 und ein Funktionsblock 22 im Flussdiagramm des Sender-Programms vorhanden. Der Nein-Ausgang N des Entscheidungsblocks 19 ist mit einem Eingang des Entscheidungsblocks 21 verbunden, dessen Ja-Ausgang Y auf einen Eingang des Funktionsblocks 22 und dessen Nein-Ausgang N auf einen Eingang des Funktionsblocks 16 geführt ist, wobei der letztere Eingang ausserdem noch zwecks Bildung der Kaskadenschaltung der Funktionsblöcke 15 und 16 mit einem Ausgang des Funktionsblocks 15 verbunden ist. Der Ja-Ausgang Y des Entscheidungsblocks 19 ist zwecks Bildung der Kaskadenschaltung der Blöcke 19 und 20 auf einen Eingang des Funktionsblocks 20 geführt, dessen Ausgang mit einem Eingang des Funktionsblocks 14 verbunden ist, wobei der letztere Eingang seinerseits zwecks Bildung der Kaskadenschaltung der Funktionsblöcke 13 und 14 mit einem Ausgang des Funtionsblocks 13 verbunden ist.

Im Sender-Programm werden vorzugsweise folgende Funktionen ausgeführt bzw. folgende Fragen gestellt:

Im Block 13: Setze zu Beginn die Werte von E und L auf Null.

Im Block 14: Nehme das nächste zu sende-de Telegramm T mit der laufenden Nummer j.

Im Block 15: Stelle die nächste zu sendende Sequenz S zusammen, welche aus dem gerade geltenden Wiederholungs-Erkennungszeichen EZ und dem nachfolgenden Telegramm T mit der laufenden Nummer j besteht.

Im Block 16: Sende die zu sendende Sequenz S.

Im Block 17: Inkrementiere den Wert von L um Eins.

Im Block 18: Warte eine bestimmte vorgegebene Zeit auf die Empfangsbestätigung der Unterstation.

Im Block 19: Wurde die Empfangsbestätigung erhalten?

Im Block 20: Stelle einerseits den Wert von L auf Null zurück und inkrementiere anderseits modulo $2^n$ den Wert von E um einen Wert Eins.

Im Block 21: Ist der Wert von L gleich einem vorgegebenen maximalen Grenzwert $L_{max}$?

Im Block 22: Das gesendete Telegramm T mit der laufenden Nummer j konnte nicht fehlerfrei empfangen werden.

Das erfindungsgemässe Sender-Programm arbeitet somit folgendermassen:

In einer Initialisierungsphase (siehe Funktionsblock 13) werden der Inhalt L eines nicht dargestellten Sequenzzählers, der im Computer 9;10;11a;11b der Zentrale 7 enthalten ist, und der Inhalt E des zu sendenden Wiederholungs-Erkennungszeichens EZ auf Anfangswerte Null gesetzt. Das nächste zu sendende Telegramm $T_E$ mit einer laufenden Nummer j wird dann aus einem Puffer-Speicher der Computeranordnung der Unterstation 1 gelesen (siehe Funktionsblock 14) und daraus anschliessend eine auszusendende Sequenz S zusammengestellt, durch eine zeitliche Aneinanderreihung in der angegebenen Reihenfolge (siehe Fig. 3) des gerade geltenden Wiederholungs-Erkennungszeichens EZ und des zu sendenden Telegramms T mit der laufenden Nummer j (siehe Funktionsblock 15).

Wenn die n Bits des zu sendenden Wiederholungs-Erkennungszeichens EZ mit $E_1$ bis $E_n$ und die m Bits des zu sendenden Telegramms T mit $T_1$ bis $T_m$ bezeichnet werden, gilt somit:

$$[S_1, S_2, \ldots, S_{n+m}] = [E_1, E_2, \ldots, E_n, T_1, T_2, \ldots, T_m],$$

wobei die n+m Bits der auszusendenden Sequenz S mit $S_1$ bis $S_{n+m}$ bezeichnet sind.

Die anstehende Sequenz S wird dann zu den Empfangsteilen in den Unterstationen 1 bis 5 gesendet (siehe Funktionsblock 16) und anschliessend der Wert des Inhaltes L des Sequenzzählers um einen Wert Eins inkrementiert, d. h. erhöht (siehe Funktionsblock 17). Der Sendeteil z. B. in der Zentrale 7 wartet nun eine bestimmte vorgegebene Zeit darauf, dass ihm der Empfangsteil in der Unterstation 1, für den das gesandte Telegramm T bestimmt ist, eine Empfangsbestätigung für den fehlerfreien Empfang des gesendeten Telegramms T sendet (siehe Funktionsblock 18 und Entscheidungsblock 19).

Trifft diese Empfangsbestätigung rechtzeitig ein, dann weiss der Sendeteil in der Zentrale 7, dass das gesandte Telegramm T mit der laufenden Nummer j fehlerfrei empfangen wurde. Der Sendeteil in der Zentrale 7 fährt in diesem Fall in seinem Programm fort, indem er den Wert von L auf Null zurückstellt und den Wert des Inhaltes E des zu sendenden Wiederholungs-Erkennungszeichens EZ, EZ, der eine binäre Zahl ist, um einen Wert Eins modulo $2^n$ inkrementiert (siehe Funktionsblock 20), d. h. um einen Wert Eins erhöht bis zu dem Augenblick, an dem der Wert $2^n-1$ erreicht wird, worauf bei der nächsten Inkrementierung der Wert von E wieder auf Null zurückstellt wird. Mit anderen Worten, jedes erstmalig gesendete Telegramm T wird, bei Null beginnend, fortlaufend bis $2^n-1$ binär durchnummeriert. Die so erhaltene binäre Zahl ist für jedes nichtwiederholte Telegramm T unterschiedlich und stellt den Inhalt E von dessem gesendeten Wiederholungs-Erkennungszeichen EZ dar. Sind im Laufe der Zeit alle mögliche $2^n$ unterschiedliche Werte von E durchlaufen und aufgebraucht worden, dann werden wieder die schon einmal verwendeten Werte von E verwendet, indem nach Erreichen des Wertes $2^n-1$ bei der nächsten Inkrementierung der Wert von E wieder auf Null zurückgestellt wird, worauf der Zähl- und Inkrementierungs-Vorgang erneut bei Null beginnt.

Nach der Inkrementierung des Wertes von E kehrt das Programm des Sendeteils der Zentrale 7 wieder zum Eingang des Funktionsblocks 14 zurück, um das nächste zu sendende Telegramm T, d. h. das Telegramm T mit der laufenden Nummer j+1 zu behandeln, welches den inkrementierten Wert von E als neu geltendes Wiederholungs-Erkennungszeichen EZ besitzt und welches vom Sendeteil der Zentrale 7 anschliessend genau so behandelt wird, wie vorher das Telegramm T mit der laufenden Nummer j von ihm behandelt wurde. Zu diesem Zweck durchläuft das Programm des Sendteils der Zentrale 7 wieder, diesmal beim Funktionsblock 14 beginnend, das in der Fig. 4 dargestellte Flussdiagramm.

Falls die Empfangsbestätigung des Empfangsteils in der Unterstation 1 ausbleibt und der Wert von L einen vorgegebenen maximalen Grenzwert $L_{max}$ noch nicht erreicht hat (siehe die Entscheidungsblöcke 19 und 21), dann kehrt das Programm des Sendeteils in der Zentrale 7 über die Nein-Ausgänge N der Entscheidungsblöcke 19 und 21 zum Eingang des Funktionsblockes 16 zurück, um die zuletzt gesendete Sequenz zu wiederholen. Das Programm des Sendeteils der Zentrale 7 durchläuft anschliessend die Blöcke 16 bis 21 sooft und wiederholt dementsprechend sooft die betreffende Sequenz S, bis dass eine Empfangsbestätigung der Unterstation 1 eintrifft oder bis dass der Grenzwert $L_{max}$ erreicht wird. Bei jedem erneuten Durchlauf des Funktionsblocks 17 wird der Wert von L um einen Wert Eins inkrementiert, so dass der Wert von L die Anzahl Aussendungen des betreffenden Telegramms T darstellt. Erreicht die Anzahl L Aussendungen der Sequenz S und damit des Telegramms T den Grenzwert $L_{max}$, so wird der Wiederholungsvorgang abgebrochen, indem das Programm des Sendeteils in der Zentrale 7 über den Ja-Ausgang Y des Entscheidungsblocks 21 zum Funktionsblock 22 übergeht. Das gesendete Telegramm T mit der laufenden Nummer j wird dann als unübertragbar erklärt.

Das in der Fig. 5 dargestellte Flussdiagramm eines Empfänger-Programms enthält Funktionsblöcke 23, 24 und 25 sowie einen Entscheidungsblock 26, die alle in der angegebenen Reihenfolge in Kaskade geschaltet sind. Das Flussdiagramm enthält ausserdem einen Funktionsblock 27, einen Entscheidungsblock 28, Funktionsblöcke 29, 30 und 31, einen Entscheidungsblock 32, einen Funktionsblock 33, einen Entscheidungsblock 34 sowie Funktionsblöcke 35 und 36, die ebenfalls alle in der angegebenen Reihenfolge in Kaskade geschaltet sind. Das Flussdiagramm enthält ferner einen Funktionsblock 37, einen Entscheidungsblock 38 sowie Funktionsblöcke 39 und 40, die auch alle in der angegebenen Reihenfolge in Kaskade geschaltet sind.

Der Nein-Ausgang N des Entscheidungsblocks 26 ist auf einen Eingang des Funktionsblocks 27 und sein Ja-Ausgang Y auf einen Eingang des Funktionsblocks 37 geführt. Der Nein-Ausgang N des Entscheidungsblocks 28 ist unmittelbar und sein Ja-Ausgang Y mittelbar über den Funktionsblock 29 mit einem gleichen Eingang des Funktionsblocks 30 verbunden. Die Nein-Ausgänge N der Entscheidungsblöcke 32, 34 und 38 sowie die Ausgänge der Funktionsblöcke 23, 36 und 40 sind auf einen gemeinsamen Eingang des Funktionsblocks 24 geführt. Die Ja-Ausgänge Y der Entscheidungsblöcke 32, 34 und 38 dienen jeweils der Bildung der zugehörigen Kaskadenschaltung.

Jedem Empfangsteil ist eine Adresse a fest zugeordnet, deren Wert in einem Speicher, z. B. im Festwertspeicher 11b (siehe Fig. 2) der Computeranordnung der betreffenden Unterstation 1 bis 5 unverlierbar abgespeichert ist.

Der Wert bzw. der Inhalt des Wiederholungs-Erkennungszeichens EZ, des Adressenteils A, des Nachrichtenteils NT und des Fehlererkennungsteils FT, der gerade empfangen wurde, wird nachfolgend mit $E_R$, $A_R$, $N_R$ bzw. $FEC_R$ bezeichnet. $FEC_R$ ist somit der gerade empfangene fehlererkennende Code. Der von einem Empfangsteil empfangene Wert $E_R$ wird als Wert $E_S$ des abgespeicherten Wiederholungs-Erkennungszeichens EZ im Empfangsteil in der Unterstation 1 abgespeichert.

Ein gerade empfangenes Telegramm $T_R$ wird, nachdem es vorher gegebenenfalls codiert und/oder gewichtet wurde, im Empfangsteil in der Unterstation 1 mit früher empfangenen Varianten des gleichen Telegramms T verknüpft, sofern solche vorhanden gewesen sind. Ein so erhaltenes verknüpftes Telegramm M wird anschliessend im Empfangsteil in der Unterstation 1 abgespeichert. Das verknüpfte Telegramm M wird anschliessend zwecks Erhalt eines fehlerkorrigierten Telegramms $T_S$ decodiert, welches ebenfalls im Empfangsteil in der Unterstation 1 abgespeichert wird. Die im Adressenteil AT und im Nachrichtenteil NT des fehlerkorrigierten Telegramms $T_S$ enthaltene Adresse bzw. Nachricht wird mit $A_S$ bzw. $N_S$ bezeichnet, während der im Fehlererkennungteil FT von $T_S$ enthaltene fehlerkorrigierte fehlererkennende Code mit $FEC_S$ bezeichnet wird.

Im Empfänger-Programm werden jeweils gemäss dem in der Fig. 5 dargestellten Flussdiagramm vorzugsweise folgende Funktionen ausgeführt bzw. folgende Fragen gestellt:

| | |
|---|---|
| Im Block 23: | Setze zu Beginn den Wert des verknüpften Telegramms M und den Wert $E_S$ des abgespeicherten Wiederholungs-Erkennungszeichens EZ auf Null. |
| Im Block 24: | Warte auf den Empfang der nächsten gesendeten Sequenz S. |
| Im Block 25: | Prüfe mit Hilfe des empfangenen fehlererkennenden Codes $FEC_R$, ob das empfangene Telegramm $T_R$ fehlerfrei ist. |
| Im Block 26: | Ist das empfangene Telegramm $T_R$ fehlerfrei? |
| Im Block 27: | Vergleiche den Wert $E_R$ des Wiederholungs-Erkennungszeichens EZ der gerade empfangenen Sequenz mit dem Wert $E_S$ des abgespeicherten Wiederholungs-Erkennungszeichens EZ. |
| Im Block 28: | Sind die Werte von $E_R$ und $E_S$ unterschiedlich? |

Im Block 29: Lösche das abgespeicherte verknüpfte Telegramm M und modifiziere den Wert $E_S$ des abgespeicherten Wiederholungs-Erkennungszeichens EZ auf dessen gerade empfangenen Wert $E_R$.

Im Block 30: Codiere und verknüpfe das empfangene Telegramm $T_R$ mit bereits früher empfangenen Varianten des Telegramms T, speichere das so erhaltene verknüpfte Telegramm M im Empfangsteil und decodiere anschliessend das verknüpfte Telegramm M zwecks Erhalt eines fehlerkorrigierten Telegramms $T_S$, und speichere letzteres.

Im Block 31: Prüfe mit Hilfe des im Fehlererkennungsteil des fehlerkorrigierten Telegramms $T_S$ enthaltenen fehlererkennenden Codes $FEC_S$, ob das fehlerkorrigierte Telegramm $T_S$ fehlerfrei ist.

Im Block 32: Ist $T_S$ fehlerfrei?

Im Block 33: Prüfe, ob die im Adressenteil AT des fehlerkorrigierten Telegramms $T_S$ enthaltene Adresse $A_S$ mit der dem Empfangsteil zugeordneten Adresse a übereinstimmt.

Im Block 34: Ist $A_S = a$?

Im Block 35: Wähle für alle Bits k = 1,2,...,m des verknüpften Telegramms M den Wert $10(1-2T_{S,k})$, wobei $T_{S,k}$ den Logikwert des betreffenden Bits im fehlerkorrigierten Telegramm $T_S$ bezeichnet, und modifiziere den Wert $E_S$ des abgespeicherten Wiederholungs-Erkennungszeichens EZ auf dessen gerade empfangenen Wert $E_R$.

Im Block 36: Akzeptiere die im Nachrichtenteil NT des fehlerkorrigierten Telegramms $T_S$ enthaltene Nachricht $N_S$ und sende eine Empfangsbestätigung zum Sendeteil.

Im Block 37: Prüfe, ob die im Adressenteil AT des empfangenen Telegramms $T_R$ enthaltene Adresse $A_R$ mit der dem Empfangsteil zugeordneten Adresse a übereinstimmt.

Im Block 38: Ist $A_R = a$?

Im Block 39: Wähle für alle Bits k = 1,2,...,m des verknüpften Telegramms M den Wert $10(1-2T_{R,k})$, wobei $T_{R,k}$ den Logikwert des betreffenden Bits im empfangenen Telegramm $T_R$ darstellt, und modifiziere den Wert $E_S$ des abgespeicherten Wiederholungs-Erkennungszeichens EZ auf dessen gerade empfangenen Wert $E_R$.

Im Block 40: Akzeptiere die im Nachrichtenteil NT des empfangenen Telegramms $T_R$ enthaltene Nachricht $N_R$ und sende eine Empfangsbestätigung zum Sendeteil.

Das erfindungsgemässe Empfänger-Programm des Empfangsteils der Unterstation 1 arbeitet somit folgendermassen:

In einer Initialisierungsphase wird der Inhalt des abgespeicherten verknüpften Telegramms M sowie der Wert $E_S$ des abgespeicherten Wiederholungs-Erkennungszeichens EZ auf Null gesetzt (siehe Funktionsblock 23), d. h.:

$[M_1 , M_2 , ... , M_m ] = [O, O, ... ,0]$ und
$[E_{S,1}, E_{S,2}, ... , E_{s,n}] = [O, O, ... ,0]$.

Anschliessend wartet der Empfangsteil in der Unterstation 1 auf eine empfangene Sequenz (siehe Funktionsblock 24). Sobald die Sequenz S empfangen worden ist, prüft der Empfangsteil der Unterstation 1 das empfangene Telegramm $T_R$ mit Hilfe des mitübertragenen und empfangenen fehlererkennenden Codes $FEC_R$ und eines an sich bekannten Fehlererkennungs-Verfahrens auf Fehlerfreiheit (siehe Funktionsblock 25 und Entscheidungsblock 26).

Falls das empfangene Telegramm $T_R$ fehlerfrei ist, geht das Empfänger-Programm über den Ja-Ausgang Y des Entscheidungsblocks 26 zum Funktionsblock 37. Im letzteren und im Entscheidungsblock 38 wird geprüft, ob die aus dem Adressenteil AT des empfangenen Telegramms $T_R$ entnommene Adresse $A_R$ mit der dem Empfangsteil der Unterstation 1 zugeordneten Adresse a übereinstimmt. Falls keine Übereinstimmung der Adressen $A_R$ und a vorliegt, kehrt das Empfänger-Programm über den Nein-Ausgang N des Entscheidungsblocks 38 zum Eingang des Funktionsblocks 24 zurück und wartet auf die nächste gesendete Sequenz S. Falls jedoch eine Übereinstimmung der Adressen $A_R$ und a vorliegt, dann wird im Funktionsblock 39 der Wert $E_S$ des abgespeicherten Wiederholungs-Erkennungszeichens EZ durch den

Wert $E_R$ des gerade empfangenen Wiederholungs-Erkennungszeichens EZ ersetzt, so dass

$$[E_{S,1}, E_{S,2}, \ldots , E_{s,n}] = [E_{R,1}, E_{R,2}, \ldots , E_{R,n}]$$

gilt. Ausserdem wird jedes fehlerfrei empfangene Telegramm T bitweise vorzugsweise mittels der Formel $(1\text{-}2T_{R,k})$ codiert, mit $k = 1,2,\ldots,m$ zwecks Erhalt codierter Bitwerte und seine so erhaltenen codierten Bitwerte anschliessend vorzugsweise mit einer hohen Gewichtung, z. B. einer zehnfachen Gewichtung, als verknüpftes Telegramm M in ein internes Gedächtnis, z. B. in den Schreib/Lese-Speicher 11a (siehe Fig. 2), der Computeranordnung der Unterstation 1 abgespeichert, so dass

$$[M_1, M_2, \ldots , M_m] = [10(1\text{-}2T_{R,1}), 10(1\text{-}2T_{R,2}), \ldots , 10(1\text{-}2T_{R,m})]$$

gilt, wobei die für die einzelnen Bits verwendete Formel $10(1\text{-}2T_{R,k})$, mit $k = 1, 2, \ldots, m$, nichts anders bedeutet, als das Logikwerte "0" codiert und gewichtet durch $+10$ und Logikwerte "1" codiert und gewichtet durch $-10$ dargestellt werden. Beispielsweise wird ein empfangenes Telegramm $T_R = [01100]$ als verknüpftes Telegramm $M = [10, -10, -10, 10, 10]$ abgespeichert. Die Bedeutung der Codierung und der Gewichtung der einzelnen Bits des empfangenen Telegramms $T_R$ wird später noch näher erläutert werden.

Die im Nachrichtenteil NT des fehlerfrei empfangenen Telegramms $T_R$ enthaltene Nachricht $N_R$ wird anschliessend vom Empfangsteil der Unterstation 1 als richtig akzeptiert und eine Empfangsbestätigung von der letzteren zum Sendeteil der Zentrale 7 gesandt (siehe Funktionsblock 40).

Falls das empfangene Telegramm $T_R$ fehlerhaft ist, wird im Funktionsblock 27 und im Entscheidungsblock 28 anschliessend zuerst geprüft, ob der Wert $E_R$ des gerade empfangenen Wiederholungs-Erkennungszeichen EZ unterschiedlich vom Wert $E_S$ des abgespeicherten Wiederholungs-Erkennungszeichen EZ ist, d. h. es wird zuerst einmal abgeklärt, ob das gerade empfangene Telegramm $T_R$ ein Wiederholungs-Telegramm ist. Falls Unterschiedlichkeit vorliegt, ist das gerade empfangene Telegramm T kein Wiederholungs-Telegramm und das verknüpfte Telegramm M wird nicht mehr gebraucht, so dass es gelöscht werden kann, während der Wert $E_S$ des abgespeicherten Wiederholungs-Erkennungszeichens EZ in den gerade empfangenen neuen Wert $E_R$ abgeändert wird (siehe Funktionsblock 29). Das gerade empfangene Telegramm $T_R$ kann in diesem Fall ein erstes von möglicherweise mehreren nachfolgenden Wiederholungs-Telegrammen sein.

Bei vorliegender Identität von $E_R$ und $E_s$ ist das gerade fehlerhaft empfangene Telegramm $T_R$ bereits ein Wiederholungs-Telegramm und der Inhalt des abgespeicherten verknüpften Telegramms M darf nicht annulliert sowie der Wert von $E_S$ nicht geändert werden, d. h. der Funktionsblock 29 muss übersprungen werden.

Unabhängig nun davon, ob $E_R$ und $E_S$ unterschiedlich sind oder nicht, d. h. unabhängig davon, ob das abgespeicherte verknüpfte Telegramm M auf Null zurückgestellt wurde oder nicht, wird anschliessend das abgespeicherte verknüpfte Telegramm M modifiziert, indem das fehlerhaft empfangene Telegramm $T_R$ vorzugsweise zuerst zwecks Erhalt codierter Bitwerte mittels der Formel $(1\text{-}2T_{R,k})$, mit $k = 1, 2, \ldots, m$, bitweise codiert und dann anschliessend die so erhaltenen codierten Bitwerte jeweils zu einem bereits abgespeicherten codierten Bitwert des verknüpften Telegramms M addiert werden, der das Resultat einer bitweisen Addition aller bereits früher fehlerhaft empfangenen Varianten des gesendeten gleichen Telegramms T ist, deren einzelnen Bits vor der bitweisen Addition auf die gleiche Weise codiert wurden wie die Bits des fehlerhaft empfangenen Telegramms $T_R$. Die so erhaltenen addierten Bitwerte der codierten Bits werden abgespeichert und bilden dann zusammen das abgespeicherte verknüpfte Telegramm M. Es gilt dabei:

$$[M_1, M_2, \ldots , M_m] = [M_1 + (1\text{-}2T_{R,1}), M_2 + (1\text{-}2T_{R,2}), \ldots , M_m + (1\text{-}2T_{R,m})]$$

Das abgespeicherte verknüpfte Telegramm M wird anschliessend bitweise decodiert zwecks Erzeugung des fehlerkorrigierten Telegramms $T_S$, indem allen positiven addierten Bitwerten der codierten Bits jeweils ein Logikwert "0" und allen negativen addierten Bitwerten sowie z. B. allen nullwertigen addierten Bitwerten jeweils ein Logikwert "1" zugeordnet wird, wobei dann alle so erhaltenen decodierten Bits zusammen das fehlerkorrigierte Telegramm $T_S$ bilden (siehe Funktionsblock 30).

Das abgespeicherte verknüpfte Telegramm $T_S$ wird anschliessend mit Hilfe des in seinem Fehlererkennungsteil FT enthaltenen ebenfalls fehlerkorrigierten fehlererkennenden Codes $FEC_S$ und des bereits erwähnten Fehlererkennungs-Verfahrens auf Fehlerfreiheit überprüft (siehe Funktionsblock 31 und Entscheidungsblock 32).

Falls das fehlerkorrigierte Telegramm $T_S$ fehlerfrei ist, wird anschliessend die in seinem Adressenteil AT enthaltene Adresse $A_S$ überprüft, ob sie mit der dem Empfangsteil der Unterstation 1 zugeordneten Adresse a übereinstimmt (siehe Funktionsblock 33 und Entscheidungsblock 34).

Falls die Adressen $A_S$ und a übereinstimmen, d. h. falls das fehlerkorrigierte Telegramm $T_S$ für das Empfangsteil der Unterstation 1 bestimmt ist, dann wird im Funktionsblock 35 einerseits der Wert

$E_S$ des abgespeicherten Wiederholungs-Erkennungszeichens EZ durch den Wert $E_R$ des gerade empfangenen Wiederholungs-Erkennungszeichens EZ ersetzt und anderseits das abgespeicherte fehlerkorrigierte, als fehlerfrei erkannte Telegramm $T_S$ vorzugsweise mittels der Formel $(1-2T_{S,k})$ codiert und auch vorzugsweise mit einer hohen Gewichtung, z. B. einer zehnfachen Gewichtung, als verknüpftes Telegramm M in das bereits erwähnte interne Gedächtnis, z. B. in den Schreib/Lese-Speicher 11a (siehe Fig. 2), der Computeranordnung der Unterstation 1 abgespeichert.

Ein jedes fehlerfrei empfangenes Telegramm $T_R$ und ein jedes fehlerkorrigierte, als fehlerfrei erkannte Telegramm $T_S$ wird somit vorzugsweise genau wie die fehlerhaft empfangenen Telegramme $T_R$ bitweise codiert zwecks Erhalt codierter Bitwerte und ihre so erhaltenen codierten Bitwerte werden anschliessend vorzugsweise mit einer hohen Gewichtung im Empfangsteil der Unterstation 1 dort abgespeichert, wo bei fehlerhaft empfangenen Telegrammen $T_R$ die addierten Bitwerte von deren codierten Bits abgespeichert wurden.

Die im Nachrichtenteil NT des fehlerkorrigierten Telegramms $T_S$ enthaltene Nachricht $N_S$ wird anschliessend vom Empfangsteil der Unterstation 1 als richtig akzeptiert und eine Empfangsbestätigung vom letzteren zum Sendeteil der Zentrale 7 gesandt (siehe Funktionsblock 36).

Falls aber das fehlerkorrigierte Telegramm $T_S$ nicht fehlerfrei ist oder falls die Adresse $A_S$ nicht mit der dem Empfangsteil der Unterstation 1 zugeordneten Adresse a übereinstimmt, dann verlässt das Empfänger-Programm über den Nein-Ausgang N den Entscheidungsblock 32 bzw. 34, um zum Eingang des Funktionsblocks 24 zurückzukehren und auf eine neue gesendete Sequenz zu warten.

Die Codierung des empfangenen Telegramms $T_R$ mit Hilfe der Formel $(1-2T_{R,k})$ erfolgt deshalb, weil dann die oben erwähnte Mehrheitsentscheidung zur Ermittlung des korrekten Logikwertes eines Bits sehr einfach realisiert werden kann, indem für jedes Bit beim Empfang eines Logikwertes "0" der Inhalt eines Speichers um einen Wert Eins inkrementiert und beim Empfang eines Logikwertes "1" um einen Wert Eins dekrementiert wird. Eine positive Zahl zeigt dann jeweils an, dass für das betreffende Bit mehr Logikwerte "0" empfangen wurden, während eine negative Zahl anzeigt, dass umgekeht mehr Logikwerte "1" vorhanden waren. Es gilt dann die Annahme, dass das betreffende Bit wahrscheinlich denjenigen Logikwert "0" bzw. "1" besitzt, der am häufigsten empfangen wurde, d. h. einen Logikwert "0", wenn ein positiver Wert, und einen Logikwert "1", wenn ein negativer Wert im betreffenden Speicher vorhanden ist. Bei Gleichheit, d. h. bei einem Wert Null im Speicher, wählt das Empfangsteil willkürlich einen der beiden möglichen Logikwerte "1" oder "0" oder er bevorzugt einen von beiden, z. B. den Logikwert "1", was letzteres in der obigen Beschreibung angenommen wurde.

In den Funktionsblöcken 35 und 39 wird vorzugsweise jedesmal, wenn ein fehlerfreies Telegramm $T_R$ bzw. ein fehlerfreies fehlerkorrigiertes Telegramm $T_S$ detektiert wird, dieses nach seiner Codierung mit einer hohen zehnfachen Gewichtung abgespeichert. Dies hat folgenden Grund:

Wenn das gesendete Telegramm T bereits einmal korrekt empfangen und abgespeichert wurde und wenn aus irgend einem Grund, z. B. weil die Empfangsbestätigung bei der Übertragung verfälscht wurde, das gleiche Telegramm T irrtümlich vom Sendeteil in der Zentrale 7 noch einmal wiederholt und diesmal falsch empfangen wird, so wird nach Empfang des wiederholten Telegramms T mindestens ein Bit im verknüpften korrekten Telegramm M um einen Wert Eins verfälscht. Wenn keine zehnfache Gewichtung bei der Generierung des verknüpften fehlerfreien Telegramms M vorgenommen worden ist, dann wird im Funktionsblock 30 aus einer "1" eine "0" oder umgekehrt aus einer "1" eine "0", d. h. ein verknüpftes fehlerfreies Telegramm M würde im nachhinein wieder verfälscht. Wenn dagegen eine Gewichtung um einen Faktor 10 bei der Generierung des verknüpften fehlerfreien Telegramms M vorgenommen worden ist, dann kann eine Bit-Verfälschung um einen Wert Eins im verknüpften Telegramm M (siehe Funktionsblock 30) nur einen Wert "10" in einen Wert "9" oder "11" umwandeln und somit kein Vorhandensein eines verknüpften fehlerhaftes Telegramm M vortäuschen.

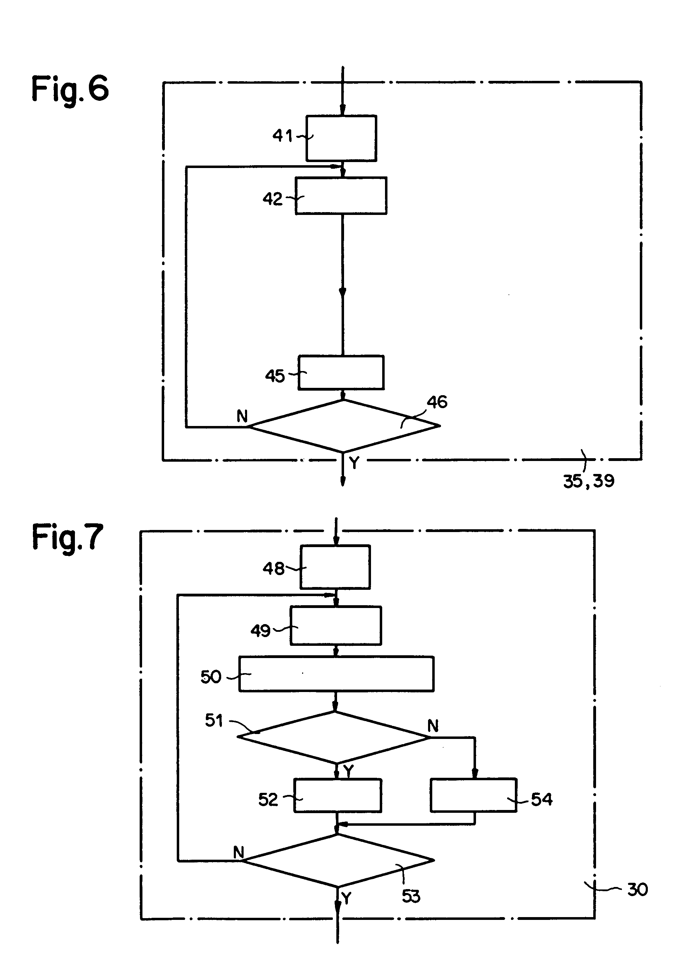

Die in den Funktionsblöcken 35 und 39 durchführte Funktion ist in einem in der Fig. 6 dargestellten Flussdiagramm, welches ein Programm zum Abspeichern des richtigen Telegramms mit zehnfachem Gewicht wiedergibt, im Detail dargestellt. Dieses Flussdiagramm enthält Funktionsblöcke 41, 42 und 45 sowie einen Entscheidungsblock 46, die alle in der angegebenen Reihenfolge in Kaskade geschaltet sind. Der Ausgang des Funktionsblocks 41 und der Nein-Ausgang N des Entscheidungsblocks 46 sind mit einem gleichen Eingang des Funktionsblocks 42 verbunden. Der Eingang des Funktionsblocks 41 bildet den Eingang des Funktionsblocks 35 bzw. 39, während der Ausgang der letzteren jeweils durch den Ja-Ausgang Y des Entscheidungsblocks 46 gebildet wird.

Im Empfänger-Codierungsprogramm werden jeweils vorzugsweise folgende Funktionen ausgeführt bzw. folgende Fragen gestellt:

Im Block 41: Setze den Wert einer Variablen k auf Null.

Im Block 42: Inkrementiere den Wert der Variablen k um einen Wert Eins.

Im Block 45:    Setze den Wert des betreffenden Bits des verknüpften Telegramms M gleich dem Wert von $10(1-2T_{R,k})$ bzw. gleich dem Wert von $10(1-2T_{S,k})$.

Im Block 46:    Ist der Wert der Variablen k gleich m?

Die im Funktionsblock 30 durchführte Funktion ist in einem in der Fig. 7 dargestellten Flussdiagramm, welches ein Empfänger-Modifizierungs- und Decodierungsprogramm wiedergibt, im Detail dargestellt. Dieses Flussdiagramm enthält Funktionsblöcke 48, 49 und 50, einen Entscheidungsblock 51, einen Funktionsblock 52 sowie einen Entscheidungsblock 53, die alle in der angegebenen Reihenfolge in Kaskade geschaltet sind. Ausserdem ist noch ein Funktionsblock 54 im Flussdiagramm vorhanden. Der Nein-Ausgang N des Entscheidungsblocks 51 ist mit einem Eingang des Funktionsblocks 54 verbunden. Der Ausgang des letzteren sowie der Ausgang des Funktionsblocks 52 sind auf einen gleichen Eingang des Entscheidungsblocks 53 geführt. Der Ausgang des Funktionsblocks 48 und der Nein-Ausgang N des Entscheidungsblocks 53 sind mit einem gleichen Eingang des Funktionsblocks 49 verbunden. Der Eingang des Funktionsblocks 48 bildet den Eingang des Funktionsblocks 30, während der Ausgang des letzteren durch den Ja-Ausgang Y des Entscheidungsblocks 53 gebildet wird.

Im Empfänger-Modifizierungs- und Decodierungsprogramm werden jeweils vorzugsweise folgende Funktionen ausgeführt bzw. folgende Fragen gestellt:

Im Block 48:    Setze den Wert der Variablen k auf Null.

Im Block 49:    Inkrementiere den Wert der Variablen k um einen Wert Eins.

Im Block 50:    Erhöhe den Wert des gerade behandelten Bits des verknüpften Telegramms M um den Wert $(1-2T_{R,k})$.

Im Block 51:    Ist der neue erhöhte Wert des Bits des verknüpften Telegramms M grösser als Null?

Im Block 52:    Setze den Wert des entsprechenden Bits $T_{S,k}$ des fehlerkorrigierten Telegramms $T_S$ gleich Null.

Im Block 53:    Ist der Wert der Variablen k gleich m?

Im Block 54:    Setze den Wert des entsprechenden Bits $T_{S,k}$ des fehlerkorrigierten Telegramms $T_S$ gleich Eins.

Die Variable k bezeichnet die laufende Nummer 1, 2, ... , m der Bits des empfangenen Telegramms $T_R$. $T_{R,k}$ und $T_{S,k}$ stellen den Logikwert des k-ten Bits des empfangenen Telegramms $T_R$ bzw. des abgespeicherten fehlerkorrigierten Telegramms $T_S$ dar.

In den Fuktionsblöcken 30, 35 und 39 wird zu Beginn der Wert der Variablen k immer jeweils auf Null zurückgestellt (siehe die Funktionsblöcke 41 und 48). Anschliessend werden jeweils zeitlich nacheinander alle laufend durchnummerierten m Bits des empfangenen Telegramms $T_R$ behandelt, indem der Wert von k jeweils und sooft um einen Wert Eins inkrementiert wird (siehe die Funktionsblöcke 42 und 49), bis dass der Wert k = m erreicht wird (siehe die Entscheidungsblöcke 46 und 53). Anschliessend verlässt dann das jeweilige Programm den Funktionsblock 30, 35 bzw. 39.

Im Funktionsblock 39 wird der Wert des k-ten Bits des verknüpften Telegramms M gleich $10(1-2T_{R,k})$ und im Funktionsblock 35 gleich $10(1-2T_{S,k})$ gesetzt (siehe Funktionsblock 45 in der Fig. 6). Nachdem alle m Bits des empfangenen Telegramms T so behandelt wurden, ist das gesamte empfangene Telegramm T (Funktionsblock 39) bzw. das gesamte, als fehlerfrei erkannte fehlerkorrigierte Telegramm $T_S$ (Funktionsblock 35) codiert und gewichtet im Empfangsteil als verknüpftes Telegramm M abgespeichert.

Im Funktionsblock 30 (siehe Fig. 7) wird für jedes gerade behandelte Bit k zum zugehörigen bereits abgespeicherten Inhalt des verknüpften Telegramms M noch der codierte Wert $(1-2T_{R,k})$ des gerade behandelten Bits k addiert (siehe Funktionsblock 50) und anschliessend abgeklärt, ob der so im abgespeicherten verknüpften Telegramm M enthaltene zugehörige neue Wert des gerade behandelten Bits grösser als Null ist oder nicht (siehe Entscheidungsblock 51). Wenn ja, dann sind Logikwerte "0" häufiger für das betreffende Bit empfangen worden als Logikwerte "1" und der Wert von $T_{S,k}$ ist gleich Null zu setzen (siehe Funktionsblock 52), wenn nein, dann sind Logikwerte "1" gleich häufig oder häufiger für das betreffende Bit empfangen worden als Logikwerte "0" und der Wert von $T_{S,k}$ ist gleich Eins zu setzen (siehe Funktionsblock 54). Nachdem alle m Bits des Telegramms T so behandelt wurden, ist das gesamte abgespeicherte verknüpfte Telegramm M decodiert und fehlerkorrigiert worden und als fehlerkorrigiertes Telegramm $T_S$ im Empfangsteil der Unterstation 1 abgespeichert.

**Patentansprüche**

1.    Verfahren zur automatischen Sendewiederholung eines Telegramms (T) bei dessem fehlerhaften Empfang, der mittels eines mitübertragenen fehlererkennenden Codes ($FEC_R$) erkannt wird, mit einer Fehlerkorrektur eines jeden fehlerhaft empfangenen Telegramms ($T_R$)

durch Verknüpfung des letzteren mit mindestens einer bereits früher fehlerhaft empfangenen Variante des gleichen gesendeten Telegramms (T), dadurch gekennzeichnet, dass das gesendete Telegramm (T) und alle Sendewiederholungen desselben mit einem gleichen Wiederholungs-Erkennungszeichen (EZ) versehen werden, bei dessem Empfang ein Empfangsteil (von 1) erkennt, ob das zugehörige gesendete Telegramm (T) eine Sendewiederholung eines bereits früher gesendeten gleichen Telegramms (T) ist, und dass nur beim Empfang gleicher Wiederholungs-Erkennungszeichen (EZ) das Empfangsteil (von 1) das fehlerhaft empfangene Telegramm ($T_R$) mit der bereits früher fehlerhaft empfangenen Variante des gleichen gesendeten Telegramms (T) verknüpft.

2. Verfahren nach Anspruch 1, dadurch gekennzeichnet, dass nach einer verwirklichten Fehlerkorrektur des fehlerhaft empfangenen Telegramms ($T_R$), ein fehlerkorrigiertes Telegramm ($T_S$) mittels eines dann ebenfalls fehlerkorrigierten fehlererkennenden Codes ($FEC_S$) auf vorhandene Fehlerfreiheit geprüft wird und dass bei nichtvorhandener Fehlerfreiheit des fehlerkorrigierten Telegramms ($T_S$) eine Sendewiederholung des zum fehlerhaft empfangenen Telegramm ($T_R$) gehörigen gesendeten Telegramms (T) veranlasst wird.

3. Verfahren nach Anspruch 2, dadurch gekennzeichnet, dass das Empfangsteil (von 1) eine Sendewiederholung veranlasst, indem es einem ihm zugehörigen Sendeteil (von 7) keine Empfangsbestätigung des gesendeten Telegramms (T) sendet, so dass das Sendeteil (von 7), wenn es nicht rechtzeitig innerhalb einer bestimmten vorgegebenen Zeit die Empfangsbestätigung erhält, eine Sendewiederholung des zuletzt von ihm gesendeten Telegramms (T) veranlasst.

4. Verfahren nach Anspruch 2 oder 3, dadurch gekennzeichnet, dass zur Durchführung der Fehlerkorrektur das fehlerhaft empfangene Telegramm ($T_R$) mit allen bereits früher fehlerhaft empfangenen Varianten des gleichen gesendeten Telegramms (T) bitweise so verknüpft wird, dass in einem so erhaltenen und im Empfangsteil (von 1) abgespeicherten verknüpften Telegramm (M) jedem Bit des empfangenen Telegramms ($T_R$) ein Wert entspricht, der das Resultat je einer Mehrheitsentscheidung ist.

5. Verfahren nach Anspruch 4, dadurch gekennzeichnet, dass das fehlerhaft empfangene Telegramm ($T_R$) zwecks Erhalt codierter Bitwerte mittels einer Formel (1-2$T_{R,k}$) bitweise codiert wird, wobei $T_{R,k}$ den Logikwert des betreffenden Bits (k) im fehlerhaft empfangenen Telegramm ($T_R$) darstellt, dass die so erhaltenen codierten Bitwerte jeweils zu einem abgespeicherten codierten Bitwert addiert werden, der das Resultat einer bitweisen Addition aller bereits früher fehlerhaft empfangenen Varianten des gesendeten gleichen Telegramms (T) ist, deren einzelnen Bits vor der bitweisen Addition auf die gleiche Weise codiert wurden wie die Bits des fehlerhaft empfangenen Telegramms ($T_R$), und dass die so erhaltenen addierten Bitwerte der codierten Bits abgespeichert werden und dann das abgespeicherte verknüpfte Telegramm (M) bilden, welches anschliessend zwecks Erhalt decodierter Bits bitweise decodiert wird, indem allen positiven addierten Bitwerten der codierten Bits ein Logikwert "0" und allen negativen addierten Bitwerten ein Logikwert "1" zugeordnet wird, wobei dann alle so erhaltenen decodierten Bits zusammen das fehlerkorrigierte Telegramm ($T_S$) bilden.

6. Verfahren nach Anspruch 5, dadurch gekennzeichnet, dass ein jedes fehlerfrei empfangenes Telegramm ($T_R$) und ein jedes fehlerkorrigiertes, als fehlerfrei erkanntes Telegramm ($T_S$) genau wie die fehlerhaft empfangenen Telegramme ($T_R$) bitweise codiert wird zwecks Erhalt codierter Bitwerte und dass ihre so erhaltenen codierten Bitwerte anschliessend mit einer hohen Gewichtung im Empfangsteil (von 1) dort abgespeichert werden, wo bei fehlerhaft empfangenen Telegrammen ($T_R$) die addierten Bitwerte von deren codierten Bits abgespeichert werden.

7. Verfahren nach einem der Ansprüche 1 bis 6, dadurch gekennzeichnet, dass das Wiederholungs-Erkennungszeichen (EZ) mit einem fehlerkorrigierenden Code versehen wird, indem sein uncodierter Inhalt mehrmals wiederholt wird.

# Fig. 1

# Fig. 2

# Fig. 3

# Fig. 4

# Fig.5

# Fig.6

# Fig.7

Europäisches
Patentamt

EUROPÄISCHER
RECHERCHENBERICHT

Nummer der Anmeldung

EP 91 10 4618

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | IEEE GLOBAL TELECOMMUNICATIONS CONFERENCE AND EXHIBITION , HOLLYWOOD , FLORIDA Bd. 3, NEW-YORK ,US ; Seiten 1648 - 1652; WU ET AL: 'Majority decoded automatic repeat request error control schemes' 28 november 1988 - 1 dezember 1988 * Seite 1648, rechte Spalte, Absatz 21 -Absatz 22 * * – – – | 1,2,4 | H 04 L 1/16 |
| Y | IBM TECHNICAL DISCLOSURE BULLETIN Bd. 24, Nr. 7B, Dezember 1981, NEW-YORK , US ; Seiten 3599 - 3601; 'Single transmitter-receiver implementation using GBN or SR protocol' * das ganze Dokument * * – – – | 1,2,4-7 | |
| Y | ALTA FREQUENZA Bd. 53, Nr. 4, MILANO , IT ; Seiten 206 - 212; G.BENELLI: 'An efficient ARQ technique with memory' * Seite 207, linke Spalte, Zeile 7 - rechte Spalte, Zeile 21 * * – – – | 1,2,4-7 | |
| A | EP-A-0 145 318 (TANDEM COMPUTERS INC.) * Seite 5, Zeile 20 - Zeile 22 * * – – – | 1 | |
| A | EP-A-0 089 831 (HARRIS CORP.) * Seite 6, Zeile 15 - Seite 7, Zeile 25 * * – – – | 1,2 | RECHERCHIERTE SACHGEBIETE (Int. Cl.5) H 04 L |
| A | US-A-4 132 975 (KOIKE) * Spalte 2, Zeile 24 - Zeile 64 * * – – – – – | 4,5 | |

Der vorliegende Recherchenbericht wurde für alle Patentansprüche erstellt

| Recherchenort | Abschlußdatum der Recherche | Prüfer |
|---|---|---|
| Den Haag | 26 November 91 | BISCHOF J.L.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-------------------------------------------------------------
& : Mitglied der gleichen Patentfamilie, übereinstimmendes Dokument